# EUROPEAN PATENT SPECIFICATION

(11) **EP 2 520 761 B1**
(45) Date of publication and mention of the grant of the patent: **16.07.2014**
(21) Application number: 12179137.0
(22) Date of filing: 26.07.2006
(51) Int. Cl.: E21B 43/08, B01D 29/15

(54) **Wellbore apparatus and method for completion, production and injection**
Bohrlochvorrichtung und -verfahren für Abschluss, Produktion und Einspritzung
Appareil pour puits de forage et procédé de conditionnement, de production et d'injection

(30) Priority: 30.09.2005 US 722801 P
(43) Date of publication of application: 07.11.2012
(62) Divisional of application: 06800326.8
(73) Proprietor: ExxonMobil Upstream Research Company, Houston, TX 77098-2189 (US)
(72) Inventor: Dale, Bruce, Sugar Land, TX 77479 (US); Yeh, Charles Shiao-Hsiung, Spring, TX 77379 (US)
(74) Representative: Troch, Geneviève

(56) References cited:
- US-A- 3 709 293
- US-A- 5 046 892
- US-A- 5 095 990
- US-A- 5 476 143
- US-A- 5 476 588
- US-A- 6 125 932

## Description

### FIELD OF THE INVENTION

This invention relates generally to an apparatus and method for use in wellbores. More particularly, this invention relates to a wellbore apparatus and method suitable for fluid production and gravel packing through redundant sand control in a single wrapping process.

### BACKGROUND

This section is intended to introduce the reader to various aspects of art, which may be associated with exemplary embodiments of the present invention, which are described and/or claimed below. This discussion is believed to be helpful in providing the reader with information to facilitate a better understanding of particular techniques of the present invention. Accordingly, it should be understood that these statements are to be read in this light, and not necessarily as admissions of prior art.

The production of hydrocarbons, such as oil and gas, has been performed for numerous years. To produce these hydrocarbons, a production system may utilize various devices, such as sand screens and other tools, for specific tasks within a well. Typically, these devices are placed into a wellbore completed in either cased-hole or open-hole completion. In cased-hole completions, wellbore casing is placed in the wellbore and perforations are made through the casing into subterranean formations to provide a flow path for formation fluids, such as hydrocarbons, into the wellbore. Alternatively, in open-hole completions, a production string is positioned inside the wellbore without wellbore casing. The formation fluids flow through the annulus between the subsurface formation and the production string to enter the production string.

However, when producing hydrocarbons from subterranean formations, it becomes more challenging because of the location of certain subterranean formations. For example, some subterranean formations are located in ultra-deep water, at depths that extend the reach of drilling operations, in high pressure/temperature reservoirs, in long intervals, at high production rate, and at remote locations. As such, the location of the subterranean formation may present problems that increase the individual well cost dramatically. That is, the cost of accessing the subterranean formation may result in fewer wells being completed for an economical field development. Accordingly, well reliability and longevity become design considerations to avoid undesired production loss and expensive intervention or workovers for these wells.

As an example, when producing formation fluids from subterranean formations located in deep water, it is possible to produce solid material, such as sand, along with the formation fluids because the formations are poorly consolidated or the formations are weakened by downhole stress due to wellbore excavation and formation fluid withdrawal. Sand control devices are usually installed downhole across these formations to retain solid material, but allow fluids to be produced. Loss of sand control may result in sand production at the surface, downhole equipment damage, reduced well productivity and/or loss of the well. Under the increasingly harsh environments, sand control devices are more susceptible to damage due to high stress, erosion, plugging, compaction/subsidence, etc. Such damage may occur to the sand control devices during transportation, installation, completion, injection, production, or stimulation. In fact, damage to the sand control devices is difficult to predict or prevent. As a result, sand control devices are generally utilized with other methods to manage the production of sand from the subterranean formation.

One of the most commonly used methods to control sand is a gravel pack. Gravel packing a well involves placing gravel or other particulate matter around a sand control device that is coupled to the production string. The sand control device may have openings or may be wrapped by a screen. For instance, in an open-hole completion, a gravel pack is typically positioned between the wall of the wellbore and a screen that surrounds a perforated base pipe. Alternatively, in a cased-hole completion, a gravel pack is positioned between a casing string having perforations and a well screen that surrounds a perforated base pipe. Regardless of the completion type, formation fluids flow from the subterranean formation into the production string through the gravel pack and sand control device.

Other sand control methods utilize may include standalone screens and frac packs to address the sand production problem. Recent technology advance in sand control has been focused on monitoring downhole conditions, improving sand retention, increasing flow performance, and reducing erosion potential. For instance, screens may be designed to enhance sand retention efficiency and flow performance. Similarly, the openings in screens may be adjusted to reduce erosion. Also, sensors may be installed in hollow wires or rods in a sand screen to monitor pressure, temperature, density, etc. to provide information about sand control performance.

Currently, sand control equipment includes little, if any, redundancy that addresses problems with failures resulting in flow impairment. In many instances, the ability of a well to produce at or near its design capacity is sustained by only a "single" barrier to the impairment mechanism. That is, a sand screen may be the only device that is utilized to control sand in unconsolidated formations. As a result, any damage to the installed sand screen may result in the production of sand along with the hydrocarbons. If a gravel pack is installed, screen damage may cause both gravel and sand production. Solids production may result in downhole equipment erosion, productivity impairment, sand handling challenges at the surface, and/or partial or complete loss of well productivity. As a result, workovers or sidetracks are eventually required. Thus, the overall system reliability for well completions has great uncertainty.

Accordingly, the need exists for a more reliable well completion apparatus and method to provide redundancy for screens, alternative flow paths inside the screens, and self-mitigating functionality, which includes compartmentalization to address the uncertainty in mechanical damage of sand control screen.

Other related material may be found in at least U.S. Patent No. 4,945,991; U.S. Patent No. 5,095,990; U.S. Patent No. 5,113,935; U.S. Patent No. 5,293,935; U.S. Patent No. 5,476,588; U.S. Patent No. 5,515,915; U.S. Patent No. 5,642,781; U.S. Patent No. 5,642,781; U.S. Patent No. 5,938,925; US Patent No. 6,125,932; U.S. Patent No. 6,227,303; U.S. Patent No. 6,554,064; U.S. Patent No. 6,684,951; U.S. Patent No. 6,715,544; U.S. Patent No. 6,745,843; U.S. Patent Application Publication No. 2005/0034860; and document U.S. 6,125,932 discloses a tortuous path sand control screen.

### SUMMARY

In one embodiment, an apparatus associated with the production of hydrocarbons is disclosed. The apparatus includes a tubular member having a central opening within an internal portion of the tubular member, wherein the central opening allows hydrocarbons to flow through the tubular member. Also, the tubular member includes openings between the central opening and a region external to the tubular member. In addition to the tubular member, at least two adjacent wire segments are disposed around the tubular member. The at least two adjacent wire segments create at least two flow paths to the central opening. Also, the at least two adjacent wire segments form at least two openings configured to prevent particles greater than a specific size from entering the openings in the tubular member.

In a first alternative embodiment, a sand control device is disclosed. The sand control device includes a plurality of wire segments disposed around the central opening. At least two adjacent wire segments of the plurality of wire segments create at least one circumferential channel between the at least two adjacent wire segments and around the central opening. Further, at least two adjacent wire segments form at least two openings configured to prevent particles greater than a specific size from entering the central opening.

In a second alternative embodiment, a system associated with production of hydrocarbons is disclosed. The system includes a wellbore utilized to produce hydrocarbons from a subsurface reservoir. Also, the system includes a production tubing string disposed within the wellbore. Finally, the system includes at least one sand control device coupled to the production tubing string and disposed within the wellbore. The at least one sand control device includes a plurality of wire segments disposed around a central opening, wherein at least one pair of adjacent wire segments of the plurality of wire segments create a circumferential channel between the at least one pair of adjacent wire segments and the central opening. Further, the at least one pair of adjacent wire segments form at least two redundant openings to prevent particles greater than a specific size from entering the central opening.

In a third alternative embodiment, a method associated with the production of hydrocarbons is described. The method includes providing a sand control device having wire segments disposed around a central opening. At least one pair of adjacent wire segments of the wire segments creates a circumferential channel between the pair of adjacent wire segments and around the central opening. Also, the at least one pair of adjacent wire segments form at least two redundant openings to prevent particles greater than a specific size from entering the central opening. Then, the sand control device is disposed within a wellbore.

In a fourth alternative embodiment, a method of manufacturing a sand control device is described. The method includes forming wire segments. Then, the wire segments are wrapped around a central opening in a single wrap process. At least one pair of adjacent wire segments create a circumferential channel between the at least one pair of adjacent wire segments and around the central opening. Also, the at least one pair of adjacent wire segments form at least two redundant openings configured to prevent particles greater than a specific size from entering the central opening.

### BRIEF DESCRIPTION OF THE DRAWINGS

The foregoing and other advantages of the present technique may become apparent upon reading the following detailed description and upon reference to the drawings in which:

FIG. 1 is an exemplary production system in accordance with certain aspects of the present techniques;

FIGs. 2A and 2B are an exemplary embodiment of a portion of a sand control device utilized in the production system of FIG. 1 in accordance with certain aspects of the present techniques;

FIG. 3 is an exemplary embodiment of wire segments coupled to an axial rod in a sand control device;

FIGs. 4A-4D are exemplary embodiments of wire segments in the sand control device of FIG. 1 in accordance with certain aspects of the present techniques;

FIGs. 5A-5G are an exemplary embodiment of channels formed by wire segments in the sand control device of FIG. 1 in accordance with certain aspects of the present techniques; and

FIGs. 6A-6D are another exemplary embodiment of channels formed in wire segments in the sand control device of FIG. 1 in accordance with certain aspects of the present techniques.

### DETAILED DESCRIPTION

In the following detailed description, the specific embodiments of the present invention are described in connection with its preferred embodiments. However, to the extent that the following description is specific to a particular embodiment or a particular use of the present techniques, it is intended to be illustrative only and merely provides a concise description of the exemplary embodiments. Accordingly, the invention is not limited to the specific embodiments described below, but rather; the invention includes all alternatives, modifications, and equivalents falling within the true scope of the appended claims.

The present technique includes a sand control device that may be utilized in a completion, production, or injection system to enhance well completion, e.g., gravel pack, and/or enhance production of hydrocarbons from a well and/or enhance the injection of fluids or gases into the well. Under the present technique, which may be referred to as a "Mazewire system," wire segments have specific geometric configurations to provide redundancy and additional flow paths through the wire segments of a sand control device. In addition to the specific geometric configurations of the wire segments, different types of wire segments may be utilized together to form channels having partitions, compartments, and baffles, which manage the flow of fluids through the wire segments. That is, wire segments may be utilized to provide redundancy, baffling (staggering), and compartmentalization for a sand control device via the wire segments of wire-wrapped screens. Accordingly, wire segments, which may be a continuous wire or individual wires coupled together, may form channels with combinations of various geometries. By wrapping these around axial rods on a tubular member with a central opening, the openings between two adjacent wire segments may provide multiple channels or flow paths in radial, circumferential, axial, helical or mixed directions. As such, the present techniques may be used in well completions with or without a gravel pack for flow control, hydrocarbon production and/or fluid injection.

Further, it should be noted that International Patent Application No. PCT/US04/01599 describes a wellbore apparatus that combines redundant, baffled (staggered), and compartmentalized sand control to self-mitigate screen damage due to erosion, compaction, and other mechanical causes. However, in the present techniques, wire segments having different geometric patterns are used to provide redundancy, baffling (staggering), and compartmentalization for sand control within a sand control device. Accordingly, these wire segments, which may be a continuous wire or individual wire segments, may self-mitigate screen damage due to erosion, compaction, and other mechanical causes. As such, the wire segments may enhance well reliability and longevity under increasingly challenging downhole conditions.

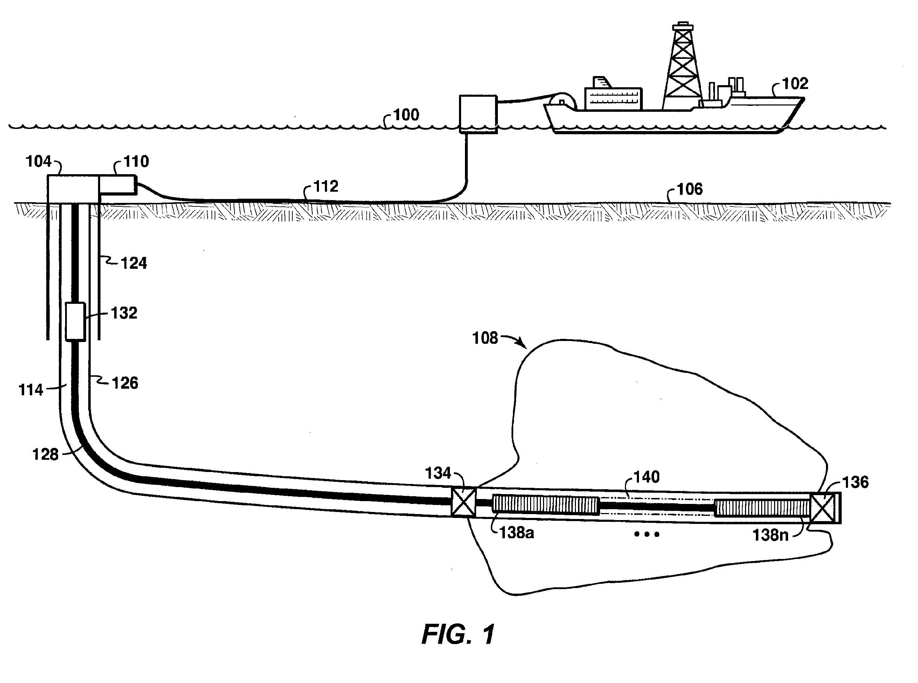

Turning now to the drawings, and referring initially to FIG. 1, an exemplary production system **100** in accordance with certain aspects of the present techniques is illustrated. In the exemplary production system **100,** a floating production facility **102** is coupled to a subsea tree **104** located on the sea floor **106.** Through this subsea tree **104,** the floating production facility **102** accesses a subsurface formation **108** that includes hydrocarbons, such as oil and gas. Beneficially, the devices, such as sand control devices **138a-138n,** may be utilized to prevent sand production and enhance the production of hydrocarbons from this subsurface formation **108.** As may be appreciated, the number n may include any integer number. However, it should be noted that the production system **100** is illustrated for exemplary purposes and the present techniques may be useful in the production or injection of fluids from any subsea, platform or land location.

The floating production facility **102** is configured to monitor and produce hydrocarbons from the subsurface formation **108.** The floating production facility **102** may be a floating vessel capable of managing the production of fluids, such as hydrocarbons, from subsea wells. These fluids may be stored on the floating production facility **102** and/or provided to tankers (not shown). To access the subsurface formation **108,** the floating production facility **102** is coupled to a subsea tree **104** and control valve **110** via a control umbilical **112.** The control umbilical **112** may include production tubing for providing hydrocarbons from the subsea tree **104** to the floating production facility **102,** control tubing for hydraulic or electrical devices, and a control cable for communicating with other devices within the wellbore **114.**

To access the subsurface formation **108,** the wellbore **114** penetrates the sea floor 106 to a depth that interfaces with the subsurface formation **108.** As may be appreciated, the subsurface formation **108** may include various layers of rock that may or may not include hydrocarbons and may be referred to as zones. The subsea tree **104,** which is positioned over the wellbore **114** at the sea floor **106,** provides an interface between devices within the wellbore **114** and the floating production facility **102.** Accordingly, the subsea tree **104** may be coupled to a production tubing string **128** to provide fluid flow paths and a control cable (not shown) to provide communication paths, which may interface with the control umbilical **112** at the subsea tree **104.**

Within the wellbore **114,** the production system **100** may also include different equipment to provide access to the subsurface formation **108.** For instance, a surface casing string **124** may be installed from the sea floor **106** to a location at a specific depth beneath the sea floor **106.** Within the surface casing string **124,** an intermediate or production casing string **126,** which may extend down to a depth near the subsurface formation **108,** may be utilized to provide support for walls of the wellbore **114.** The surface and production casing strings **124** and **126** may be cemented into a fixed position within the wellbore **114** to further stabilize the wellbore **114.** Within the surface and production casing strings **124** and **126,** a production tubing string **128** may be utilized to provide a flow path through the wellbore **114** for hydrocarbons and other fluids. Along this flow path, a subsurface safety valve **132** may be utilized to block the flow of fluids from the production tubing string **128** in the event of rupture or break above the subsurface safety valve **132.** Further, packers **134** and **136** may be utilized to isolate specific zones within the wellbore annulus from each other.

In addition to the above equipment, other devices or tools, such as sand control devices **138a-138n** and a gravel pack **140,** may be utilized to manage the flow of fluids and particles into the production tubing string **128.** The sand control devices **138a-138n,** which may herein be referred to as sand control device(s) **138,** may include wire-wrapped screens, membrane screens, expandable screens and/or wire-mesh screens. For exemplary purposes, the sand control devices **138** are herein described as being wire-wrapped screens that include various wire segments. Also, around the sand control devices **138,** a gravel pack or natural sand pack **140** may be disposed to provide additional mechanism to manage the flow of fluids and particles into the production tubing string **128.** The sand control devices **138** may manage the flow of hydrocarbons from the subsurface formation **108** to the production tubing string **128.**

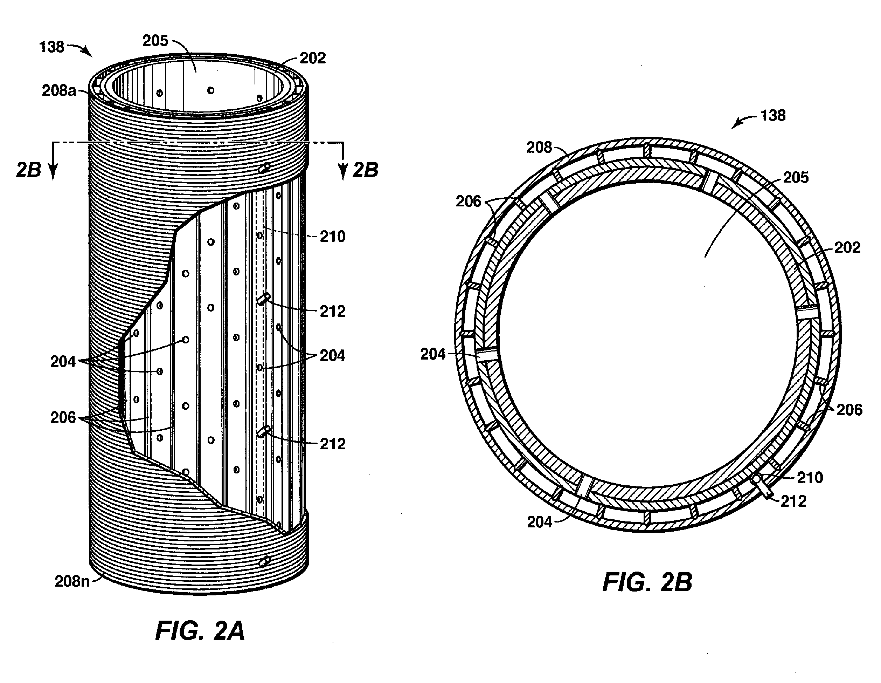

Typically, a wire-wrapped screen includes a continuous wire spirally wrapped on a set of circularly spaced and axially extended rods. The wire is attached to the axial rods by welding at each contact point. The winding process is designed and controlled to attain the desired opening size between two adjacent wires. The wire wrapped screen may be slipped on a perforated tubular member or base pipe for a slip-on wire-wrapped screen or wrapped directly onto the base pipe in a direct wire-wrapped screen, as is known in the art. The wire segments form a screen that prevents particles, such as sand, sand grains or other solid particles greater than a specific size, from entering the production tubing string **128.** Accordingly, exemplary wire segments utilized in a sand control device **138** is shown in greater FIGs. 2A and 2B.

FIGs. 2A and 2B are an exemplary embodiment of a portion of a sand control device, such as one of the sand control devices **138a-138n,** utilized in the production system 100 of FIG. 1 in accordance with certain aspects of the present techniques. Accordingly, FIGs. 2A and 2B may be best understood by concurrently viewing FIG. 1. In FIG. 2A, the sand control device **138** includes various components that are utilized to manage the flow of fluids and particles into or out of the production tubing string **128.** For instance, the sand control device **138** may include a tubular member or base pipe **202** having one or more openings **204** that provide a flow path from outside the base pipe **202** to a central opening **205** within the base pipe **202.**

To provide sand control, a screen of wire segments **208a-208n** is disposed around one or more axial rods **206** may be utilized. The axial rods **206,** which may include any number of axial rods **206,** may be secured to the base pipe **202** via welds or other similar techniques. The axial rods **206** provide support to one or more wire segments **208a-208n,** which may be referred to as wire segments **208.** These wire segments **208** prevent or restrict the flow of particles, such as sand, into the central opening **205** of the base pipe **202,** as discussed below in greater detail. The wire segments **208** may be continuously wrapped and welded on the axial rods **206.** The resulting hollow, cylindrical wire-rod embodiment is slipped on the base pipe **202** and secured to the base pipe **202** by welding metal rings at the two opposite ends. The metal rings also seal the open ends between wire segments **208,** axial rods **206,** and base pipe **202.** Alternatively, the wire segments **208** may be direct-wrapped on the axial rods **206,** which are disposed along the external face of base pipe **202.** The direct-wrap secures wire segments **208** and axial rods **206** to the base pipe **202.** The metal rings are welded at two opposite ends to seal the open ends between wire segments **208,** axial rods **206,** and base pipe **202.** Accordingly, these wire segments **208** may be either slip-on or direct wrap wire segments that are attached to the axial rods **206,** which are known methods of attaching wire segments in a sand control device. Also, the wire segments **208** and axial rods 206 may be partially or completely coated with an erosion resistance material (e.g., nickel-based thermal spray or metal shields) to further prevent damage.

In addition, alternate path technology may also be utilized with the axial rods **206** and wire segments **208.** The alternate path technology may include a shunt tube **210** that is disposed on the outside of wire segments **208,** which are described in U.S. Patent Nos. 4,945,991 and 5,113,935, or between the base pipe **202** and the wire segments **208,** which are described in U.S. Patent Nos. 5,515,915 and 6,227,303. The shunt tube **210** may include one or more nozzles **212** positioned along the length of the shunt tube **210.** If the shunt tube **210** is positioned between the base pipe **202** and the wire segments **208** (FIGs. 2A and 2B), the nozzles **212** may extend beyond the wire segments **208** to provide a flow path from the shunt tube **210** to a location external to the wire segments **208,** such as a wellbore annulus. For an alternative perspective of the partial view of the sand control device **138,** a cross sectional view of the various components along the line 2B is shown in FIG. 2B

To enhance the sand control device, the wire segments **208** may be wrapped around the base pipe **202** in various directions and with varying pitch. For instance, a wire-wrapped screen may include wire segments wrapped around the base pipe **202** at a constant pitch or at varying pitches. The constant pitch may be utilized to prevent certain sized particles from entering the production tubing string **128,** while the varied pitch wire segments **208** may be utilized to manage the amount of fluid flow through various portions of the wire segments **208.** In addition, the direction of the wire segments may be adjusted to provide channels or flow paths within the wire segments **208,** as discussed below in greater detail. This variation in direction may form flow paths that are perpendicular to the fluid flow through the base pipe **202,** parallel to the fluid flow through the base pipe **202,** or other angular variations relative to the fluid flow through the base pipe **202.**

Further, variations in the geometry of the wire segments **208** may form unique openings and channels within the wire segments **208.** The openings may be described as designing openings and restrictive openings. Designing openings may be utilized for sand control and well performance purposes to retain sand grains and allow fluid and fines (silts and clays) to pass through the openings. Restrictive openings may be utilized to retain sand grains and restrict the flow of fluids and fines. Depending upon the magnitude of restriction, restrictive openings may allow no flow, minimum flow, and/or diminishing flow due to fines plugging, as noted above. The restriction may be furnished by wrapping the wire segments **208** to have a narrower opening, lengthy opening, tortuous opening, keystone shape opening and/or any combination thereof.

By utilizing various geometric patterns and combinations of design and restrictive openings, the wire segments **208** may be utilized to construct tortuous flow paths or channels through adjacent pairs of wire segments **208.** For instance, because restrictive openings are stronger and more erosion resistant than the designing openings, restrictive openings may be arranged to restrict flow along a channel, which may be referred to as a partition. In particular, openings in each channel of the wire segments may be characterized by having at least one restrictive opening and at least one designing opening. Alternatively, any two adjacent openings may include different combinations of design and restrictive openings to stagger or baffle the fluid flowing into the channels. Accordingly, the use of different openings and geometries in the wire segments **208** may provide additional flow paths and redundancy for the sand control device.

As an example, fluids flow from the subsurface formation **108** into the wellbore **114** and through openings formed by the wire segments **208.** With the channels formed in the wire segments **208,** fluids may flow through the channels formed in the wire segments **208** and/or may travel directly into the central opening **205** through the openings **204** in the base pipe **202.** From the central opening **205,** fluid flows through to the floating production facility **102** via the production tubing string **128.** Typically, in a damaged sand control device, sand may cause sanding-up of the production tubing string **128** and/or the wellbore **114,** downhole equipment damage, or massive sand production at the surface.

However, because of the configuration and geometric patterns of the wire segments **208,** particles, such as sand, may be retained by the channels, openings, or compartments formed by the wire segments **208.** Accordingly, if one pair of wire segments **208** is eroded or damaged, fluid along with sand may pass into one of the channels associated with that pair of the wire segments **208.** Within the channel, the momentum of the incoming sand grains is reduced in the channel due to collisions with the walls formed by the wire segments **208.** Depending on both magnitude and direction of sand/fluid momentum, sand grains may be captured by restrictive openings, captured by neighboring staggered designing openings, lose kinetic energy when traveling further along the channel, or stopped and entrapped at a partition formed by the wire segments **208.** As additional sand grains are accumulated back to the eroded location along the channel, the flow resistance rises and the sand/fluid flow is diverted into another non-eroded portion of the wire segments **208.** That is, the flow of fluids at the eroded portion of the wire segments **208** is reduced or shut off, while well production continues through other flow paths or channels within the wire segments **208.** As such, the wire segments **208** may self-mitigate damage to the sand control device at various locations without well intervention.

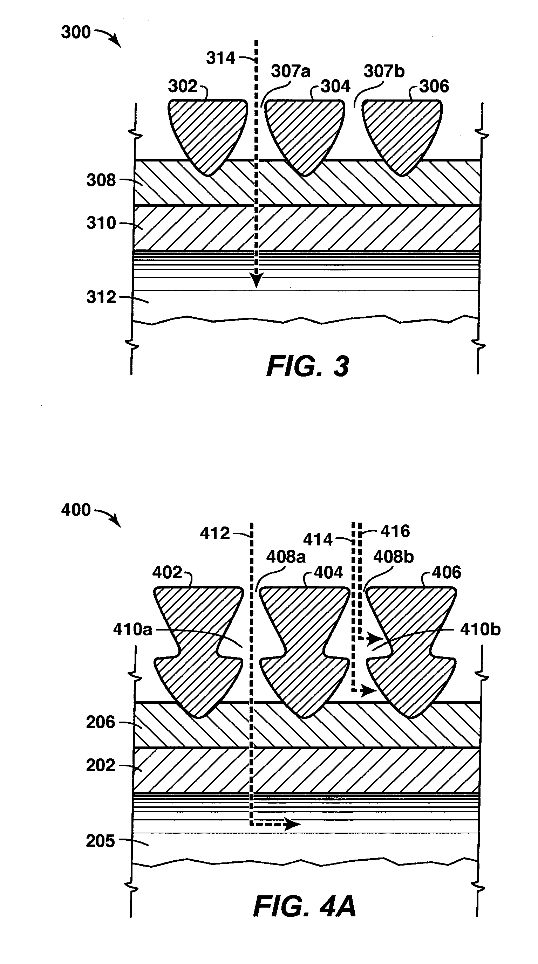

As a specific example, FIG. 3 illustrates an exemplary embodiment of wire segments coupled to an axial rod in a sand control device. In this embodiment, which is herein referred to by reference numeral **300,** a base pipe **310** having a central opening **312** is coupled to an axial rod **308** and wire segments **302-306.** The wire segments **302-306** may have a keystone shape with a fluid openings or gaps **307a** and **307b** between the wire segments **302-306.** Fluid or particles may flow along a fluid flow path **314** through the openings **307a** and **307b** between the wire segments **302-306.** Then, the fluid or particles may flow through openings (not shown) in the base pipe **310** to enter the central opening **312.** As such, particles carried by the fluid may block or strike the wire segments **302-306,** which may result in mechanical damage to the wire segments **302-306.** Another example of mechanical damage to the wire segments **302-306** may be caused by compaction and subsidence of subsurface formation rocks. Excessive load on the screen during transportation or installation may also result in mechanical damage.

In the example of FIG. 3, the openings **307a** and **307b** of the wire segments **302-**306 are the only mechanism for preventing particles from entering the central opening **312** of the base pipe **310.** If one of the fluid openings **307a** and **307b** between the wires **302-306** is eroded or damaged, the wire segments **302-306** may fail to prevent particles from entering the central opening **312** of the base pipe **310** and the production tubing string **128.** That is, the sand control device that utilizes these wire segments **302-306** may produce excessive amounts of solid particles, such as sand, if one of the openings **307a** and **307b** fails.

However, under the present techniques, the wire segments of FIGs. 4A-4D may provide redundancy for the wire segments and additional flow paths within the wire segments. FIG. 4A is an exemplary embodiment of wire segments coupled to one of the axial rods **206** in the sand control device **138** of FIG. 1 in accordance with certain aspects of the present techniques. In this embodiment, which is herein referred to by reference numeral **400,** the base pipe **202** having a central opening **205** is coupled to the axial rod **206** and wire segments **402-406,** which may be examples of the wire segments **208a-208n.** The wire segments **402-406** may have double stacked keystone patterns with fluid openings or gaps **408a, 408b, 410a** and **410b** between the wire segments **402-406.** A lobe on the lower keystone portion of each of the wire segments **402-406** may be utilized to secure the wire segments **402-406** to the axial rod **206.** These keystone portions may be secured via welding the wire segments **402-406** to the axial rod **206** or other similar techniques.

In this pattern, redundancy and additional flow paths are provided by the wire segments **402-406.** As shown along the fluid flow path **412,** redundancy is provided by the double stacked keystone pattern, which provides two restrictive openings **408a** and **410a** or **408b** and **410b** between each pair of wire segments **402-406.** Indeed, the openings **408a, 408b, 410a** and **410b** in the wire segments **402-406** have inverse keystone geometry that may minimize plugging. The openings **408a, 408b, 410a** and **410b** allow fluid to pass through, but prevent particles of specific sizes from passing through. Further, if the wire segments **402-406** are disposed with in an angular direction relative to the fluid flow through the base pipe **202,** fluid flow paths **414** and **416** may be utilized to provide a tortuous fluid flow path through the wire segments **402-406.** As such, two flow paths are provided through the wire segments **402-406** along with the fluid flow path **412** into the central opening **205.**

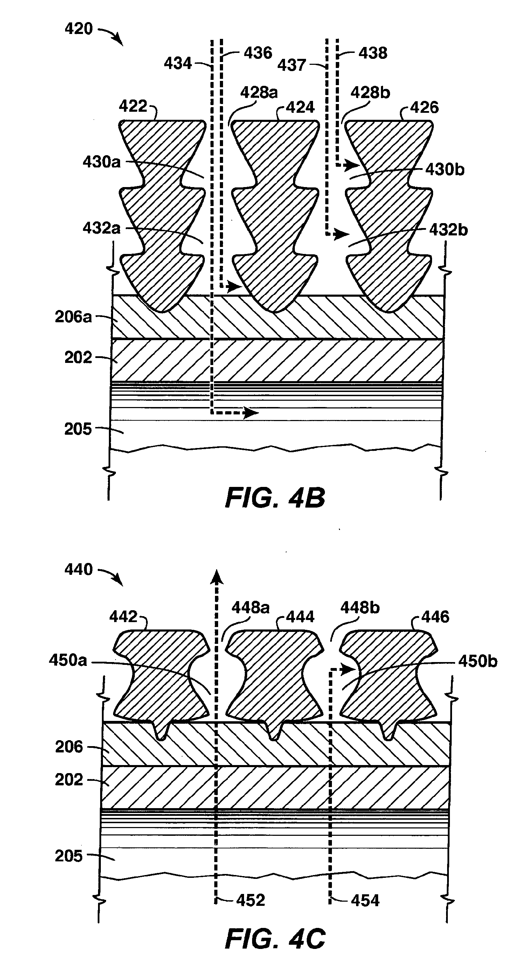

In an alterative embodiment, FIG. 4B is an alternative exemplary embodiment of wire segments coupled to an axial rod **206** in the sand control device **138** of FIG. 1 in accordance with certain aspects of the present techniques. In this embodiment, which is herein referred to by reference numeral **420,** the base pipe **202** having a central opening **205** is coupled to the axial rod **206** and wire segments **422-426,** which may be another example of the wire segments **208a-208n.** The wire segments **422-426** may have triple stacked keystone patterns with fluid openings or gaps **428a, 428b, 430a, 430b, 432a** and **432b** between the wire segments **422-426** to provide more flow paths than the embodiment of FIG. 4A. Similar to the discussion above, a lobe on the bottom portion of the keystone portions may secure the wire segments **422-426** to the axial rod **206.**

In this pattern, redundancy and additional flow paths are again provided by the wire segments **422-426.** As shown along the fluid flow path **434,** redundancy is provided by the triple stacked keystone pattern, which provides three restrictive openings **428a, 430a** and **432a,** and **428b, 430b** and **432b** between each pair of wire segments **422-426.** Again, the inverse keystone geometry may minimize plugging of the wire segments **422-426.** In addition, if the wire segments **422-426** are disposed with in an angular direction relative to the fluid flow through the base pipe **202,** fluid flow paths **436, 437** and **438** may be utilized to provide a tortuous path through the wire segments **422-426.** As such, three flow paths **436-438** are provided through the wire segments **422-426** along with the fluid flow path **434** into the central opening **205.**

In a second alterative embodiment, FIG. 4C is a second alternative exemplary embodiment of wire segments coupled to an axial rod **206** in the sand control device **138** of FIG. 1 in accordance with certain aspects of the present techniques. In this embodiment, which is herein referred to by reference numeral **440,** the base pipe **202** having a central opening **205** is coupled to the axial rod **206** and wire segments **442-446,** which may be another example of the wire segments **208a-208n.** The wire segments **442-446** may have hyperboloidal patterns with fluid openings or gaps **448a, 448b, 450a** and **450b** between the wire segments **442-446** to provide dual redundant sand control with inverse keystone openings in the injection direction. A bottom lobe on each of the wire segments **442-446** may be utilized to secure the wire segments **442-446** to the axial rod **206,** which may include welding the wire segments **442-446** to the axial rod **206.**

In this pattern, redundancy and additional flow paths are provided by the wire segments **442-446.** As shown along the fluid flow path **452,** redundancy is provided by the hyperboloidal pattern, which provides two restrictive openings **448a, 448b, 450a** and **450b** between each pair of wire segments **442-446.** Because the keystone pattern is susceptible to plugging, the hyperboloidal pattern provides dual redundant sand control with inverse keystone openings in the injection direction, along the flow path **452.** In addition, if the wire segments **442-446** are disposed with in an angular direction relative to the fluid flow through the base pipe **202,** a fluid flow path **454** may be utilized to provide a tortuous path through the wire segments **442-446.** As such, an additional flow path is provided through the wire segments **442-446** along with the fluid flow path **452** into the central opening **205.**

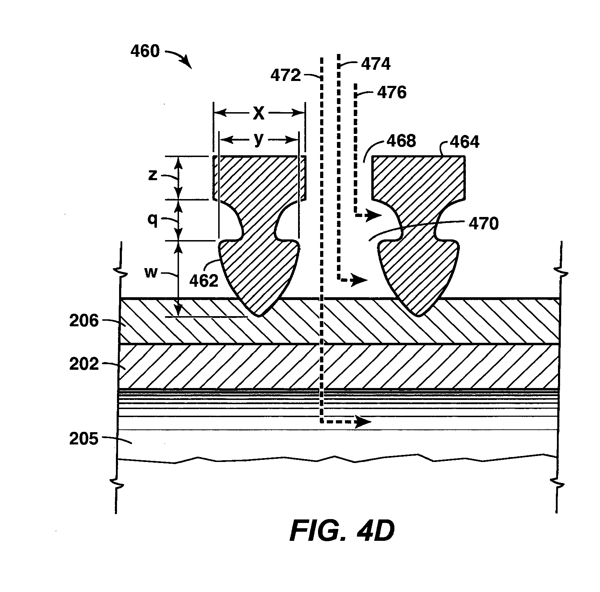

In FIG. 4D, a third alternative exemplary embodiment of wire segments coupled to an axial rod **206** in the sand control device **138** of FIG. 1 in accordance with certain aspects of the present techniques is shown. In this embodiment, which is herein referred to by reference numeral **460,** the base pipe **202** having a central opening **205** is coupled to the axial rod **206** and wire segments **462** and **464,** which may be another example of the wire segments **208a-208n.** The wire segments **462** and **464** may have a lower or keystone portion stacked partial hyperboloidal or middle portion and an upper or rectangular portion to form a unique geometric pattern. This geometric pattern forms fluid openings or gaps **468** and **470** between the wire segments **462** and **464.** The upper portion forms a restrictive path that is flat, while the middle and lower portions provide flow paths through the wire segments **462** and **464.** Because the bottom portion has a keystone pattern on each of the wire segments **462** and **464,** it may be utilized to secure the wire segments **462** and **464** to the axial rod **206.** As noted above, these may be secured via welding the wire segments **462** and **464** to the axial rod **206** or other similar techniques.

In this geometric pattern, redundancy and additional flow paths are provided by the wire segments **462** and **464.** As shown along the fluid flow path **472,** redundancy is provided by the geometric pattern, which provides a first restrictive opening **468** and a second designing opening **470** between each pair of wire segments **462** and **464.** In addition, if the wire segments **462** and **464** are positioned in an angular direction relative to the fluid flow through the base pipe **202,** fluid flow path **476** may be utilized to provide an additional flow path through the wire segments **462** and **464.** That is a circumferential channel may be formed within the wire segments **462** and **464.** As such, additional flow path **476** is provided through the wire segments **462** and **464** along with the fluid flow path **472** into the central opening **205.**

To provide specific flow restrictions and tortuous paths through the wire segments **462** and **464,** the width of each of the wire segments **462** and **464** may be modified. For instance, upper portion of the wire segment **462** may be configured to have a width x that is wider than a width *y* for the lower portion. With these widths, the straight opening **468** may be more resistant to erosion from particles, while still providing a fluid flow path. That is, the opening **468** formed between the rectangular portions of the wire segments **462** and **464** is narrower than the opening **470** between the keystone sections of the wire segments **462** and **464.** As a specific example, the width *x* may be from about 0.005 millimeter (mm) to about 1 mm wider than the width *y*.

Further, the height of each of the wire segments **462** and **464** may also be modified to provide specific flow restrictions and tortuous paths through the pair of wire segments **462** and **464.** For instance, the upper portion may be configured to have a height *z,* the middle portion may be configured to have a height *q,* and the lower portion may be configured to have a height *w*. To provide a more restrictive flow path through the wire segments **462** and **464,** the height z of the upper portion may be longer than the heights *q* and *w* of the lower and middle portions. Alternatively, to provide larger volume flow paths, the heights *q* and *w* for the lower and middle portions may be increased to form larger channels between the wire segments **462** and **464.**

Beneficially, in each of these embodiments, the wire segments provide redundant sand control along with additional flow paths through the wire segments. Indeed, the openings in the wire segments of FIGs. 4A, 4B and 4D utilize an inverse keystone geometry or partial inverse keystone geometry to minimize plugging, while the hyperboloidal pattern in FIG. 4C reduces plugging for injection flow paths. Further, because each embodiment includes uniquely shaped wire segments formed from a continuous segment of wire, a single wire-wrap process may be used to attach these wire segments to the axial rod. This single wire-wrap process may reduce costs by reducing multiple wrap processes steps in forming, e.g., the redundant sand control device.

As can be appreciated, the specific geometric patterns of the wire segments may include different variations, which still provide redundant sand control and additional flow paths through the wire segments. These geometric patterns may include different shapes that are designed to enhance operation in a specific direction, such as an injection well or a production well. Alternatively, the geometric patterns may also include shapes for operating in injection and production wells, as noted in FIG. 4C.

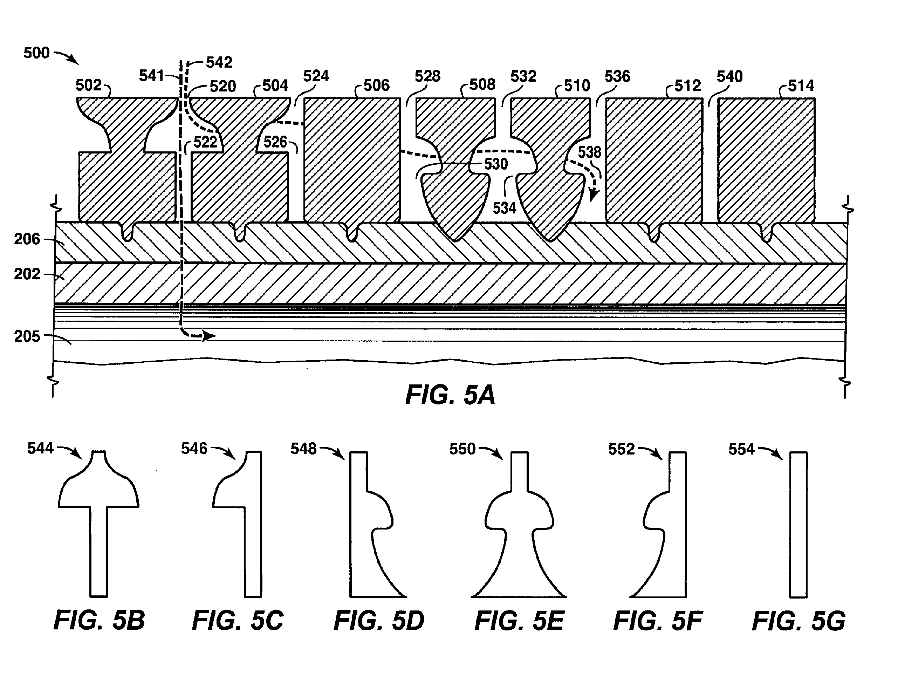

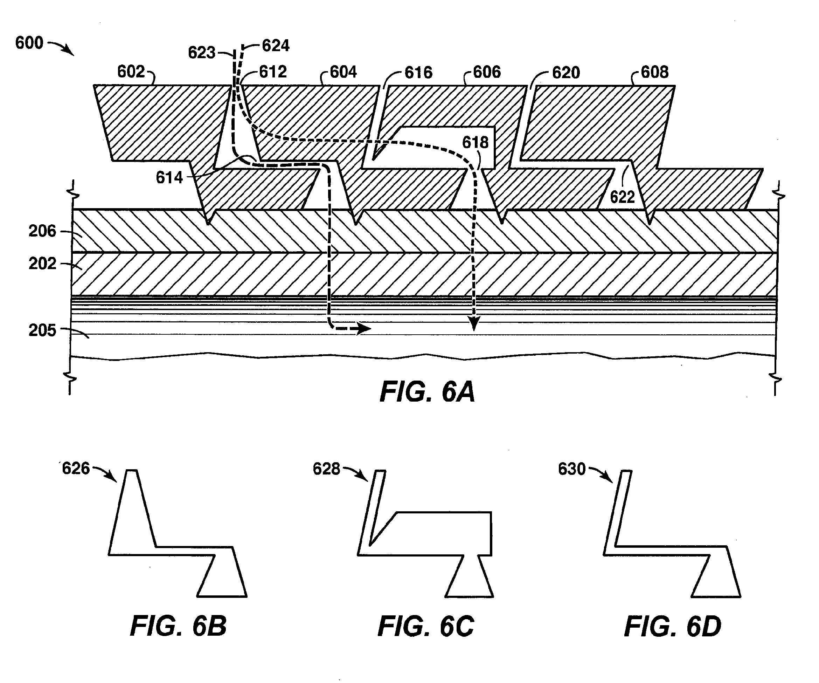

In addition to the specific geometric patterns of the wire segments, different types of wire segments may be utilized together to form partitions, compartments, and baffles that manage the flow of fluids within a wire-wrapped screen. As noted above, under the present techniques, wire segments of different types may also be used to provide redundancy, baffling (staggering), and compartmentalization for sand control with a wire-wrapped screen, such as sand control device **138.** Thus, the wire segments **208,** which may be a continuous wire or coupled individual wire segments, may be utilized to form channels having various combinations of curved, wavy or flat geometries. Accordingly, the channels formed by the wire segments are discussed in greater detail in FIGs. 5A-5G and 6A-6D.

FIGs. 5A-5G are exemplary embodiments of channels formed by wire segments in the sand control device of FIG. 1 in accordance with certain aspects of the present techniques. In this embodiment, which is herein referred to by reference numeral **500,** the base pipe **202** is coupled to the axial rod **206** and wire segments **502-514,** which may be examples of the wire segments **208a-208n.** Each of the wire segments **502-514** may include a portion that is utilized to secure the wire segments to the axial rod **206,** as discussed above. The wire segments **502-514** may also include different geometric patterns and various combinations of openings **520-540** to provide channels through the wire segments **502-514.** For instance, openings **520, 524, 530, 534** and **538** may be design openings, while openings **522, 526, 528, 532, 536** and **540** may be restrictive openings.

In this embodiment, the wire segments **502-514** include three alternating patterns or shapes along a single wire. In particular, wire segments **502** and **504** have a first pattern, which includes a partial hyperboloidal portion stacked on a rectangular portion. Wire segments **506, 512** and **514** have a second pattern, which includes a rectangular portion, while wire segments **508** and **510** have a third pattern, which includes a rectangular portion, a partial hyperboloidal portion, and a keystone portion stacked on each other. The length of each wire segment shape may be varied, but for this example, each wire segment is at least two winding (wrapping) around the base pipe **202,** which does not exceed 305 meter (one thousand feet) for any wire segment.

Accordingly, in this configuration, the wire segments **502-514** form a first or outer screen layer formed by openings **520, 524, 528, 532, 536** and **540** and a second or inner screen layer formed by the openings **522, 526, 530, 534** and **538.** The outer and inner screen layers provide a fluid flow path **541** to the central opening **205** or provide a fluid flow path **542** along a channel formed by the wire segments **502-514.** Along the fluid flow path **542,** fluid flows directly into the central opening **205** through a pair of wire segments **502-514.** However, along this flow path **542,** the different wire segments **502-514** create a helical or circumferential channel that forms a flow maze for fluids. The channel formed by these wire segments **502-514** may be more clearly understood by viewing FIGs. 5B-5G.

In FIGs. 5B-5G, the channel formed by the wire segments **502-514** is shown. In FIGs. 5B and 5E, inverse keystone channels **544** and **550** are formed between the wire segments **502** and **504** and wire segments **508** and **510,** respectively. In FIGs. 5C, 5D and 5F, half-inverse keystone channels **546, 548** and **552** are formed between wire segments **504** and **506,** wire segments **506** and **508,** and wire segments **510** and **512,** respectively. The flat sections of the channels **544, 546, 548, 550,** and **552** are utilized to stagger the fluid flow, which may plug or restrictive flow with particles in the fluid. In FIG. 5G, a rectangular shaped channel **554** is formed between wire segments **512** and **514.** This rectangular channel **554** forms a partition that blocks the flow path in the channel between the outer and inner screen layers. The rectangular channel **554** also forms a partition that blocks the helical flow path **542** in FIG 5A.

During well production, fluid passing through one of the openings **520, 524, 528, 532, 536** and **540** in the outer screen layer flows along the channel between the wire segments **502-514** until exiting through one of the openings **522, 526, 530, 534** and **538** in the inner screen layer. However, when an opening in the outer screen layer, such as opening **520,** is damaged, fluid and sand pass into the channel and follow the flow path **542.** While fluid may enter the central opening **205** through openings **522, 526, 530, 534** and **538** in the inner screen layer, sand may continue along the flow path **542** to be blocked at the partition formed by wire segments **512** and **514.** As the sand flows along the flow path **542,** sand continues to dehydrate due to fluid loss or lose momentum (kinetic energy) due to the collision with the wire segments that form the channel walls. As a result, sand may accumulate and pack the channel along the flow path **542** to the eroded section of wire segments. That is, sand grains and particles may pack the channel to diminish or shut off fluid flow from the eroded opening in a self-mitigating manner. Thus, sand and fluid in the wellbore may be diverted to other openings in the wire segments that are intact and operating as designed to continue to produce hydrocarbons without interruption.

FIGs. 6A-6D are another exemplary embodiments of channels formed in wire segments in the sand control device **138** of FIG. 1 in accordance with certain aspects of the present techniques. In this embodiment, which is herein referred to by reference numeral **600,** the base pipe **202** is coupled to the axial rod **206** and wire segments **602-608,** which may be other examples of the wire segments **208a-208n.** Each of the wire segments **602-608** may include a portion that is utilized to secure the wire segments to the axial rod **206** and include different geometric patterns, as discussed above. However, in this configuration, the openings **612-622** of the wire segments **602-608** may have more complex geometric patterns and may be configured to have extended restrictive openings. These extended restrictive openings, such as openings **614, 616, 620,** and **622,** provide additional mechanical strength and flow resistance to intensify the contrast between restrictive openings **614, 616, 620** and **622** and designing openings **612** and **618.** Accordingly, the restrictive openings formed by these geometric patterns are more resistant to erosion.

In this embodiment, the wire segments **602-608** include three alternating geometric patterns in a single wire. In particular, wire segments **602** and **604** have a first pattern, wire segment **606** has a second pattern, and wire segment **608** has a third pattern. Each of these patterns is a unique geometric pattern that is utilized with an adjacent pattern to form an extended restrictive opening **614, 616, 620,** or **622.** Again, the length of each wire segment may be varied, but for this example, each wire segment **602-608** may be about at least two windings (wrapping) around the base pipe **202.**

Accordingly, similar to the discussion above, the wire segments **602-608** form a first or outer screen layer, which is formed by openings **612, 616** and **620,** and a second or inner screen layer, which is formed by openings **614, 618** and **622.** The outer and inner screen layers provide a fluid flow path **623** to the central opening **205** or provide a fluid flow path **624** along a helical channel formed by the wire segments **602-608.** Along the fluid flow path **623,** fluid flow directly into the central opening **205** through the wire segments. However, due to the restriction in opening **614,** the flow passing opening **612** may preferably follow flow path **624.** Along flow path **624,** the different wire segments **602-608** create a helical channel that forms a flow maze for fluids. The channel formed by these wire segments **602-608** may be more clearly understood by viewing FIGs. 6B-6D.

In FIGs. 6B-6D, the channel formed by the wire segments **602-608** is shown. In FIG. 6B, a trapezoidal channel **626** is formed between the wire segments **602** and **604.** It is understood that the trapezoidal channel mimics an inverse keystone openings in FIGs. 4A-4D and 5A to minimize plugging by particles smaller than or equal to a specific size. In FIG. 6C, a partially rectangular channel **628** is formed between wire segments **604** and **606.** Finally, in FIG. 6D, a narrow rectangular channel **630** is formed between wire segments **606** and **608.** This rectangular channel **630** forms a partition that blocks the flow path between the outer and inner screen layers. The rectangular channel **630** also forms a partition that blocks the helical flow path **624.**

During well production, fluid passing through one of the openings **612** and **616,** but preferably opening **612,** in the outer screen layer flows along the helical channel between the wire segments **602-608** until exiting through one of the openings **614, 618** or **622** in the inner screen layer. However, when an opening in the outer screen layer, such as opening **612,** is damaged, fluid and sand pass into the channel and follow the flow path **624.** While fluid may enter the central opening **205** through openings **614, 618** and **622** in the inner screen layer, sand may continue along the flow path **624** to be blocked at the partition formed by wire segments **606** and **608.** As the sand flows along the flow path **624,** sand continues to dehydrate due to fluid loss or lose momentum (kinetic energy) due to the collision with the wire segments **602-608** that form the channel walls. As a result, sand may accumulate and pack the channel along the flow path **624** to the eroded section of wire segments **602** and **604.** That is, sand grains and particles may pack the channel to diminish or shut off fluid flow from the eroded opening **612** in a self-mitigating manner. Thus, sand and fluid in the wellbore may be diverted to other openings that are intact and operating as designed to continue to produce hydrocarbons without interruption.

Beneficially, various combinations of these wire segments in FIGs. 5A-6D may form channels that self-mitigate screen damage at any opening without well intervention. Accordingly, the different configurations provide redundant sand control with outer and inner screen layers, flow baffling within the helical channels and flow maze formed by the different wire segments, and compartmentalization by the partitions that isolate different helical flow paths in the wire segments. As such, specific combinations of these and other wire segments with different geometries may be utilized to provide compartments, baffles, and redundancy for sand control devices.

It should be noted that other combinations of wire segments may also be utilized. These other combinations may be based on the specific design desired reliability, productivity, production profile, accessibility, and other functional requirements for the well. For instance, the design of the compartments and baffles formed by the wire segments may depend on factors, such as manufacturing, materials, and/or locale of installation. The functional requirements may include, but are not limited to: exclusion of produced solids (sand control); improved mechanical strength or flexibility; exclusion or inclusion of specific fluids (downhole diversion and fluid conformance); delivery of treatment chemicals (for example, scale inhibitors, corrosion inhibitors, etc.); isolation of specific formation types; control of production rate or pressures; and/or measurement of fluid properties. Also, any number of wire segments may be combined to form channels or flow mazes.

Also, the number of compartments or baffles formed by the wire segments may be based on other design considerations. For instance, fewer compartments may enable larger compartment size and result in fewer redundant flow paths through the wire segments. On the other hand, an excessive number of compartments may decrease the compartment size, increase redundant flow paths, and increase manufacturing complexity. Similarly, a variation of compartments may also be utilized to provide specific functionality for certain intervals of a well. For baffles, the wire segments may include walls to completely or partially redirect fluid flow or change the fluid flow velocity. As such, the compartments or baffles may be formed within the wire segments to perform specific functions for the well.

Further, it should be noted that the present techniques may also be utilized for gravel packing. During gravel packing, the flow direction is similar to well production but gravel pack is continuously disposed around the screen. Accordingly, the wire segments may be configured to provide specific functionalities for gravel packing or may be designed to operate as both in gravel packing and well production.

Further, it should be noted that the present techniques may also be utilized for an injection well. During well injection, the flow direction is reversed, but the wire segments may function similar to well production. Accordingly, the wire segments may be configured to provide specific functionalities for an injection well or may be designed to operate as both an injection and production well.

While the present techniques of the invention may be susceptible to various modifications and alternative forms, the exemplary embodiments discussed above have been shown by way of example. However, it should again be understood that the invention is not intended to be limited to the particular embodiments disclosed herein. Indeed, the present techniques of the invention are to cover all modifications, equivalents, and alternatives falling within the scope of the invention as defined by the following appended claims.

## Claims

1. An apparatus associated with the production of hydrocarbons comprising:
a tubular member (202) comprising:
a central opening (205) within an internal portion of the tubular member (202), wherein the central opening (205) allows hydrocarbons to flow through the tubular member (202); and
a plurality of openings (204) between the central opening (205) and a region external to the tubular member; and
at least two adjacent wire segments (208) disposed around the tubular member (202), forming a channel,
**characterized in that** the at least two adjacent wire segments (208) have a configuration and a geometric pattern that form at least two redundant openings (408-410; 428-432; 448-450; 468-470) configured to prevent particles greater than a specific size from entering the plurality of openings (204) and additional flow path(s) (414-416; 436-438; 454; 474-476; 542; 624) within the wire segments (208).

2. The apparatus of claim 1, wherein the additional flow path(s) are provided by disposing the wire segments with an angular direction relative to the fluid flow through the tubular member.

3. The apparatus of claim 1 wherein the at least two adjacent wire segments are configured to form baffles within at least one of at least two flow paths.

4. The apparatus of claim 1 wherein the at least two adjacent wire segments are configured to form a compartment along at least one of at least two flow paths.

5. The apparatus of claim 4 wherein the compartment prevents particles greater than a specific size from passing into the central opening.

6. The apparatus of claim 1 wherein the tubular member comprises a perforated base pipe.

7. The apparatus of claim 1 wherein the at least two adjacent wire segments having different geometries are wrapped around the tubular member to create different levels of flow maze and opening geometries along the tubular member.

8. The apparatus of claim 1 further comprising at least one shunt tube (210) disposed between the tubular member and the at least two wire segments or between the at least two wire segments and a wellbore (114).

9. The apparatus of claim 1 wherein the apparatus is used for producing hydrocarbons or in injection operations.

10. The apparatus of claim 1 wherein the apparatus is used for gravel packing a well.

11. The apparatus of claim 1 comprising a plurality of rods (206) disposed between the tubular member and the at least two adjacent wire segments.

12. The apparatus of claim 1 wherein each of the at least two adjacent wire segments (504-508; 604-608) have different geometric patterns.

13. The apparatus of claim 12 wherein the at least two adjacent wire segments form a compartment and at least one baffle along at least one of at least two flow paths.

14. The apparatus of claim 1 wherein each of the at least two adjacent wire segments comprise a stacked keystone pattern (402-406; 422-426).

15. The apparatus of claim 1 wherein the at least two adjacent wire segments comprise a first wire segment (502, 504; 602, 604) having a first pattern, a second wire segment (506, 512, 514; 606) having a second pattern, and a third wire segment (508, 510; 608) having a third geometric pattern.

16. The apparatus of claim 15 wherein the first wire segment, second wire segment and third wire segment are disposed around the tubular member in alternating configurations.

17. The apparatus of claim 1 wherein the at least two redundant openings comprise a restrictive opening and a design opening formed between the at least two adjacent wire segments.

## Patentansprüche

1. Vorrichtung, die mit der Produktion von Kohlenwasserstoffen im Zusammenhang steht, mit:
einem rohrförmigen Teil (202), das aufweist:
eine zentrale Öffnung (205) innerhalb eines inneren Bereichs des rohrförmigen Teils (202), wobei die zentrale Öffnung (205) erlaubt, dass Kohlenwasserstoffe durch das rohrförmige Teil (202) fließen, und
eine Mehrzahl von Öffnungen (204) zwischen der zentralen Öffnung (205) und einer Region außerhalb des rohrförmigen Teils und
wenigstens zwei benachbarten Drahtsegmenten (208), die um das röhrenförmige Teil (202) herum angeordnet sind und einen Kanal bilden,
**dadurch gekennzeichnet, dass** die wenigstens zwei benachbarten Drahtsegmente (208) eine Gestaltung und eine geometrisches Form haben, die wenigstens zwei redundante Öffnungen (408 - 410; 428 - 432; 448 - 450; 468 - 470), die dazu ausgestaltet sind, um zu verhindern, dass Teilchen, die größer als eine spezifische Größe sind, in die Mehrzahl von Öffnungen (204) eintreten, und einen zusätzlichen Fließweg/zusätzliche Fließwege (414 - 416, 436 - 438; 454; 474 - 476; 542; 624) innerhalb der Drahtsegmente (208) bilden.

2. Vorrichtung nach Anspruch 1, wobei der zusätzliche Fließweg/die zusätzlichen Fließwege bereitgestellt werden, indem die Drahtsegmente in einer im Winkel stehenden Richtung relativ zu der Fluidströmung durch das rohrförmige Teil angeordnet sind.

3. Vorrichtung nach Anspruch 1, wobei die wenigstens zwei benachbarten Drahtsegmente dazu ausgestaltet sind, Leitflächen innerhalb wenigstens eines der wenigstens zwei Fließwege zu bilden.

4. Vorrichtung nach Anspruch 1, wobei die wenigstens zwei benachbarten Drahtsegmente dazu ausgestaltet sind, einen Kanal entlang wenigstens eines der wenigstens zwei Fließwege zu bilden.

5. Vorrichtung nach Anspruch 4, wobei der Kanal verhindert, dass Teilchen, die größer als eine spezifische Größe sind, in die zentrale Öffnung eintreten.

6. Vorrichtung nach Anspruch 1, wobei das rohrförmige Teil ein perforiertes Basisrohr aufweist.

7. Vorrichtung nach Anspruch 1, wobei die wenigstens zwei benachbarten Drahtsegmente mit unterschiedlichen Geometrien um das rohrförmige Teil herum gelegt sind, um entlang des rohrförmigen Teils unterschiedliche Grade von Fließlabyrinthen und Öffnungsgeometrien zu erzeugen.

8. Vorrichtung nach Anspruch 1, die wenigstens eine Nebenschlussleitung (210) aufweist, die zwischen dem rohrförmigen Teil und den wenigstens zwei Drahtsegmenten oder zwischen den wenigstens zwei Drahtsegmenten und einem Bohrloch (114) angeordnet ist.

9. Vorrichtung nach Anspruch 1, wobei die Vorrichtung zur Produktion von Kohlenwasserstoffen oder bei Einspritzoperationen eingesetzt wird.

10. Vorrichtung nach Anspruch 1, wobei die Vorrichtung zum Kiesschütten eines Bohrlochs verwendet wird.

11. Vorrichtung nach Anspruch 1, die eine Mehrzahl von Stäben (206) aufweist, die zwischen dem rohrförmigen Teil und den wenigstens zwei benachbarten Drahtsegmenten angeordnet sind.

12. Vorrichtung nach Anspruch 1, wobei jedes der wenigstens zwei benachbarten Drahtsegmente (504 - 508; 604 - 608) eine unterschiedliche geometrische Form hat.

13. Vorrichtung nach Anspruch 12, wobei die wenigstens zwei benachbarten Drahtsegmente wenigstens einen Kanal und wenigstens eine Leitfläche entlang wenigstens eines von den wenigstens zwei Fließwegen bilden.

14. Vorrichtung nach Anspruch 1, wobei jedes der wenigstens zwei benachbarten Drahtsegmente eine Form gestapelter Schlusssteine (402 - 406; 422 - 426) aufweist.

15. Vorrichtung nach Anspruch 1, wobei die wenigstens zwei benachbarten Drahtsegmente ein erstes Drahtsegment (502, 504; 602, 604) mit einer ersten Form, ein zweites Drahtsegment (506, 512, 514; 606) mit einer zweiten Form und ein drittes Drahtsegment (508, 510; 608) mit einer dritten geometrischen Form aufweisen.

16. Vorrichtung nach Anspruch 15, wobei das erste Drahtsegment, das zweite Drahtsegment und das dritte Drahtsegment um das röhrenförmige Teil in abwechselnden Konfigurationen angeordnet sind.

17. Vorrichtung nach Anspruch 1, wobei die wenigstens zwei redundanten Öffnungen eine einschränkende Öffnung und eine Designöffnung aufweisen, die zwischen den wenigstens zwei benachbarten Drahtsegmenten gebildet sind.

## Revendications

1. Appareil associé à la production d'hydrocarbures comprenant :
un organe tubulaire (202) comprenant :
- une ouverture centrale (205) située à l'intérieur d'une partie interne de l'organe tubulaire (202), dans lequel l'ouverture centrale (205) permet aux hydrocarbures de circuler dans l'organe tubulaire (202) ; et
- une pluralité d'ouvertures (204) entre l'ouverture centrale (205) et une région externe à l'organe tubulaire ; et
- au moins deux segments grillagés adjacents (208) placés autour de l'organe tubulaire (202), formant un canal,
**caractérisé en ce que** le ou les deux segments grillagés adjacents (208) ont une configuration et un dessin géométrique qui forment au moins deux ouvertures excédentaires (408-410, 428-432, 448-450, 468-470) configurées de façon à empêcher les particules dont la taille est plus grande qu'une taille spécifique d'entrer dans la pluralité d'ouvertures (204) et des trajet(s) d'écoulement supplémentaire(s) (414-416, 436-438, 454, 474-476, 542, 624) à l'intérieur des segments grillagés (208).

2. Appareil selon la revendication 1, dans lequel le ou les trajets d'écoulement supplémentaires sont formés en plaçant les segments grillagés de façon qu'ils fassent un angle par rapport à la direction d'écoulement du fluide dans l'organe tubulaire.

3. Appareil selon la revendication 1 dans lequel le ou les deux segments grillagés adjacents sont configurés de façon à former des chicanes à l'intérieur d'au moins un parmi le ou les deux trajets d'écoulement.

4. Appareil selon la revendication 1 dans lequel le ou les deux segments grillagés adjacents sont configurés de façon à former un compartiment le long d'au moins un parmi le ou les deux trajets d'écoulement.

5. Appareil selon la revendication 4 dans lequel le compartiment empêche les particules plus grandes qu'une taille spécifique de pénétrer dans l'ouverture centrale.

6. Appareil selon la revendication 1 dans lequel l'organe tubulaire comprend un tuyau de base perforé.

7. Appareil selon la revendication 1 dans lequel le ou les deux segments grillagés adjacents ayant des géométries différentes enveloppent l'organe tubulaire pour créer différents niveaux de labyrinthes d'écoulement et différentes géométries des ouvertures le long de l'organe tubulaire.

8. Appareil selon la revendication 1 comprenant en outre au moins un conduit collectif (210) placé entre l'organe tubulaire et le ou les deux segments grillagés ou entre le ou les deux segments grillagés et un trou de forage (114).

9. Appareil selon la revendication 1 dans lequel l'appareil est utilisé pour produire des hydrocarbures ou dans des opérations d'injection.

10. Appareil selon la revendication 1 dans lequel l'appareil est utilisé pour garnir un puits de graviers.

11. Appareil selon la revendication 1 comprenant une pluralité de tiges (206) placées entre l'organe tubulaire et le ou les deux segments grillagés adjacents.

12. Appareil selon la revendication 1 dans lequel chacun du ou des deux segments grillagés adjacents (504-508, 604-608) possède des dessins géométriques différents.

13. Appareil selon la revendication 12 dans lequel le ou les deux segments grillagés adjacents forment un compartiment et au moins une chicane le long d'au moins un parmi le ou les deux trajets d'écoulement.

14. Appareil selon la revendication 1 dans lequel chacun du ou des deux segments grillagés adjacents comprend un dessin en clés de voûte empilées (402-406, 422-426).

15. Appareil selon la revendication 1 dans lequel le ou les deux segments grillagés adjacents comprennent un premier segment grillagé (502, 504, 602, 604) ayant un premier dessin, un deuxième segment grillagé (506, 512, 514, 606) ayant un deuxième dessin et un troisième segment grillagé (508, 510, 608) ayant un troisième dessin géométrique.

16. Appareil selon la revendication 15 dans lequel le premier segment grillagé, le deuxième segment grillagé et le troisième segment grillagé sont placés autour de l'organe tubulaire selon des configurations en alternance.

17. Appareil selon la revendication 1 dans lequel la ou les deux ouvertures excédentaires comprennent une ouverture restrictive et une ouverture conceptuelle formée entre le ou les deux segments grillagés adjacents.
